# EUROPEAN PATENT APPLICATION

(11) **EP 2 654 013 A1**
(43) Date of publication of application: **23.10.2013**
(21) Application number: 13163606.0
(22) Date of filing: 12.04.2013
(51) Int. Cl.: G06Q 30/06, G06Q 10/08, A47F 3/00

(54) **Display window with integrated multimedia totem provided with touch-screen**

(30) Priority: 20.04.2012 IT GE20120023 U
(71) Applicant: Gagliardi, Ettore, 16125 Genova (IT)
(72) Inventor: Gagliardi, Ettore, 16125 Genova (IT)
(74) Representative: Porsia, Attilio

(57) **Abstract**

Display window(1) comprising one or more support shelves (2) for the display of products (P) such as fish, cheese, meat products, and the like, characterized in that said display window is associated with a multimedia totem (4) provided with touch-screen (5) on which icons or buttons (I) appear corresponding to the products displayed in the display window (1), whereby touching a button (Ip) a video card that provides a series of information about the product (P) selected can be accessed.

## Description

The present invention relates to a display window with integrated multimedia totem provided with touch-screen, printer and speakers. This integration is not a mere "association" of two means, but rather allows an authentic synergistic action between these two elements, whose main characteristic is to offer complete knowledge of the products displayed in the display window, by way of video images and/or photos.

Thus, for example, by touching the icon on the screen corresponding to a particular product displayed in the display window, a video card that provides all the information on the product is activated, about the capture area thereof and which may also provide a series of cooking recipes for the product.

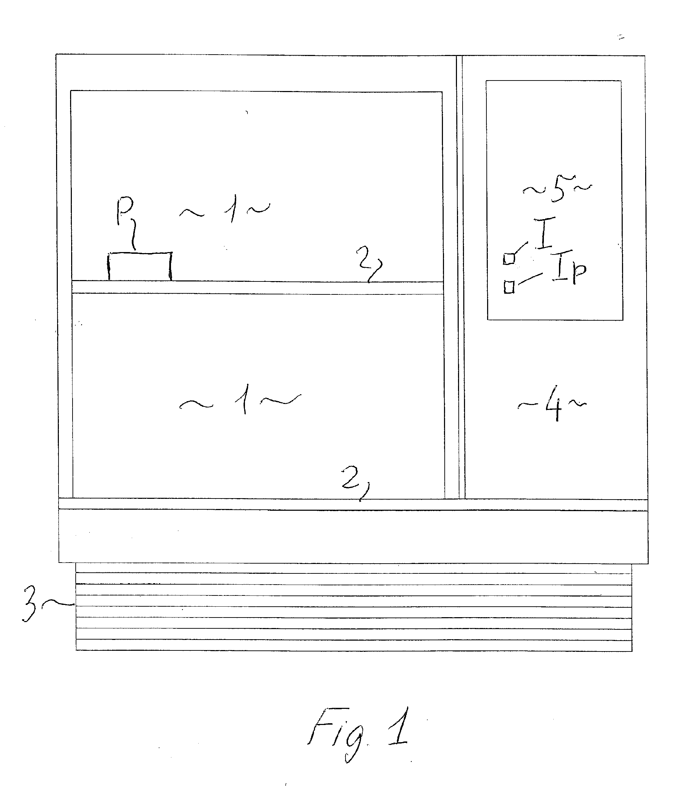

Further characteristics and advantages of the device according to the invention will better appear from the following detailed description of an embodiment thereof, illustrated in Figure 1 of the attached drawing, which represents a front view of a display window according to the invention with integrated multimedia totem provided with a touch-screen.

With reference to the drawing, with 1 the display window is represented, in the example illustrated a refrigerated display window, on whose shelves 2 the products P are displayed. The base 3 of the display window houses, in a manner known per se, the refrigerator system (not illustrated). To the display window the multimedia totem 4, with touch-screen 5 is associated, on which icons or buttons I appear, such as the Ip for the product P displayed in the display window.

Assuming for example that the product P is a fish product, touching the button Ip it is possible to access a video card that provides a variety of information relating to the selected product, such as its capture area, the characteristics of the species, the nutritional values, recipes for the preparation of the product for the table, and so on.

The management software also allows to process useful data for both the retailer and the production company about customer preferences for example.

The device according to the invention, connected to an ADSL network, can be controlled "remotely" by the production company to update the product description, recipes, promotional data and more.

It goes without saying that the present description is given only by way of nonlimiting example of the device according to the invention.

Thus, the dimensions of the device can be modulated depending on the number of products displayed and depending on the space available of the retailer, therefore, the present device is not limited to what illustrated and described, but comprises all those executive variations and modifications which are within the scope of the innovative concept described above, and substantially as claimed below.

Thus, for example, the totem 4 can also contain a printer for the printing of recipes or similar information, upon customer's request.

In the course of the description reference is made to a refrigerated display window. Naturally, said display window may not even be refrigerated.

## Claims

1. A display window (1) comprising one or more support shelves (2) for the display of products (P) such as fish, cheese, meat products, or the like, **characterized in that** said display window is associated with a multimedia totem (4) provided with a touch screen (5) on which icons or buttons (I) appear corresponding to the products (P) displayed in the display window (1), so by touching a button (Ip) a video card that provides a variety of information related to the selected product (P) can be accessed.

2. The display window according to claim 1, **characterized in that** the management software associated with the multimedia totem (4) allows to process data useful for both the retailer and the production company of the products for sale, for example about the customers preferences.

3. The display window according to claim 1, **characterized in that** said information relating to the product (P) may comprise films or the like.

4. The display window according to the preceding claims, substantially as illustrated and described, and for the purposes stated herein.
